# EUROPEAN PATENT APPLICATION

(11) **EP 4 024 263 A1**
(43) Date of publication of application: **06.07.2022**
(21) Application number: 21209157.3
(22) Date of filing: 18.11.2021
(51) Int. Cl.: G06F 40/247, G06F 40/284, G06F 40/30, G06F 16/35, G06F 16/36, G06N 5/02

(54) **METHOD FOR DYNAMIC MAINTENANCE OF A KNOWLEDGE GRAPH, TERMINAL DEVICE AND STORAGE MEDIUM**

(30) Priority: 29.12.2020 CN 202011594681
(71) Applicant: Xiamen Meiya Pico Information Co., Ltd, Xiamen, Fujian 361000 (CN)
(72) Inventor: YUAN, Quan, Xiamen (CN); WANG, Dian, Xiamen (CN); GUO, Guifeng, Xiamen (CN); QIAO, Sheng, Xiamen (CN); FU, Jinzheng, Xiamen (CN)
(74) Representative: KIPA AB

(57) **Abstract**

The present application relates to a method of dynamic maintenance of a knowledge graph, a terminal device and a storage medium. The method comprises: S1: acquiring business data; S2: loading a thesaurus file, and extracting knowledge from the business data according to the thesaurus file; S3: converting the thesaurus into concepts in ontologies and relationships between concepts; S4: classifying the extracted knowledge into specific concepts in the thesaurus; S5: establishing new knowledge ontologies and relationships between knowledge ontologies according to the knowledge and concepts associated with the knowledge in the thesaurus; S6: merging new knowledge ontologies and relationships with existing knowledge ontologies and relationships; S7: updating the knowledge graph and the thesaurus according to the knowledge ontologies after merging; S8: for new business features, codes or non-formatted descriptions, extracting descriptors according to semantic analysis, extending the thesaurus constitution following the classification principle of the thesaurus, and then repeating step S2 ~ S7. The present application solves the problems of lag, inflexible expansion and low efficiency in a knowledge map update.

## Description

### Cross Reference to Related Applications

This application claims the priority of the Chinese patent application CN202011594681.0, filed on Dec. 29, 2020. The contents of this Chinese patent application are all hereby incorporated by reference.

### FIELD

The present application relates to the field of knowledge graphs, specifically, a method of dynamically upholding knowledge graphs, a terminal device, and a storage medium corresponding to the method.

### BACKGROUND

Knowledge graphs is intended to describe the entities, concepts, and their relationships that exist in the real world in a structured form, which is convenient for computers to better manage, calculate and understand massive information on the Internet.

An ontology is a collection of abstract concepts, which may comprise a person, place, article, event, organization, content, and so on. An entity is a combination of an ontology and an instance. Generally, structured knowledge is represented in the form of a graph. The nodes of the graph represent semantic symbols, and the edges of the graph represent semantic relationships between the symbols. So, knowledge graphs can also be seen as a huge picture of the node entity or concept, side by relationships between them. In addition, the Knowledge graph can also have some property edges, such as the main achievements of a person, the birthday, etc.

When a knowledge graph was established, with the emergence of new knowledge ontologies, the evolution of the existing knowledge ontologies themselves, and the changes in semantic relationships between ontologies, it is necessary to discover these changes in time and update the knowledge graph. However, currently, in terms of maintaining the semantic relationships between knowledge ontologies, it is either almost static, or maintained only when the knowledge ontologies were found and updated manually for new business data accessed. The manual discovering or merging ontology is time-consuming and strenuous, and requires the participation of experts in specific fields, which makes the update of a knowledge graph lagged, inefficient.

### SUMMARY

In order to solve the above-mentioned problems, the present application proposes a method of dynamically upholding knowledge graphs, a terminal device and a storage medium corresponding to the method.

The specific solution comprises:
A method of dynamically upholding knowledge graphs base on thesauruses, comprising the following steps:
   S 1: acquiring business data;
   S2: loading a thesaurus file, and extracting entity knowledge, entity attribute knowledge and entity relationship knowledge from the business data according to the thesaurus file;
   S3: converting descriptors in the thesaurus into concepts in ontologies, and converting a relationship between descriptors in the thesaurus into a relationship between concepts;
   S4: according to the converted thesaurus, classifying knowledge extracted in step S2 into specific concepts in the thesaurus;
   S5: constructing new knowledge ontologies and relationships between knowledge ontologies according to the knowledge and concepts associated with the knowledge;
   S6: merging new knowledge ontologies with existing knowledge ontologies and merging the new relationships between knowledge ontologies with existing relationships between knowledge ontologies;
   S7: updating the knowledge graph and the thesaurus according to the knowledge ontologies after merging;
   S8: for new business features, codes or non-formatted descriptions, extracting descriptors according to semantic analysis, extending the thesaurus constitution following the classification principle of the thesaurus, and then repeating step S2 ~ S7.

Further, the entity knowledge, the entity attribute knowledge and the entity relationship knowledge are extracted by three methods: structured extraction, unstructured extraction, and special extraction.

Further, step S2 comprises merging different expressions of the same entity using natural language processing technologies.

Further, converting a relationship between descriptors in the thesaurus comprises:
1) In the adjustment of hierarchical relationship, the relationship between genus and species, the relationship between whole and part are separated, and they are accurately classified into the corresponding relationship between ontologies;
2) In the adjustment of correlation relationship, the attribute relationship is mainly clarified, in other words, determining the semantic attribute relationship between ontology concepts by referring to thesaurus' qualifiers and comments;
3) In the adjustment of equivalence relationship, the synonym relationship, near-synonym relationship and substitution relationship between the ontologies are revealed.

Further, in step S5, new knowledge ontologies and relationships between knowledge ontologies are established by entity similarity calculation, superior-subordinate relationship digging, entity relationship or attribute statistical analysis, and knowledge reasoning methods.

Further, in step S8, a superordinate descriptor of a new concept and a corresponding concept category are found.-

A terminal device for dynamically upholding knowledge graphs comprising a processor, a storage device, and a computer program stored in the storage device and run on the processor, the processor executing the computer program to implement steps of the above method according to the embodiment of the present application.

A computer readable storage medium stores a computer program, the computer program implementing steps of the above method according to the embodiment of the present application when executed by a processor.

With the above technical solution, the present application solves the problems of lagging, inflexible expansion and low efficiency in updating a knowledge graph, realizes timely and accurate updating and expansion of the knowledge graph, meanwhile, feeds back for the thesaurus.

### BRIEF DESCRIPTION OF THE DRAWINGS

FIG. 1 is a flow chart of the first embodiment of the present application.
FIG. 2 illustrates an embodiment of a computer system.

### DETAILED DESCRIPTION

To further illustrate the embodiments, drawings are attached in the present application. The drawings are a part of the disclosure of the present application, which are mainly used to illustrate the embodiments, and explain the operating principle of the embodiments in cooperation with relevant descriptions of the specification. Referring to these contents, those commonly skilled in the art should be able to understand other possible implementation manners and advantages of the present application.

The present application is further described here by the drawings and specific embodiments.

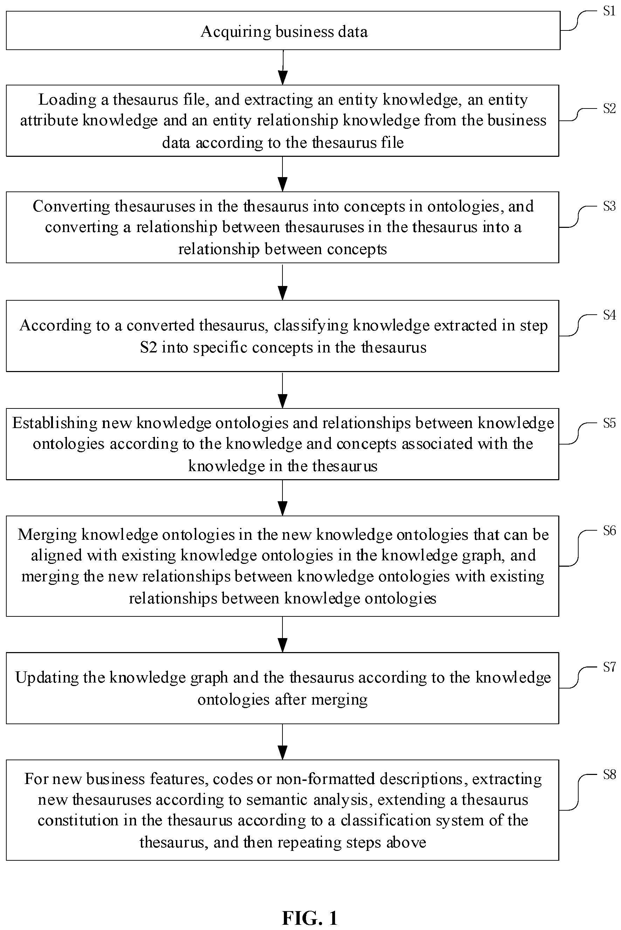

The First Embodiment:
An embodiment of the present application provides a method of dynamic maintenance of a knowledge graph. FIG. 1 is a flow chart of the method of dynamic maintenance of a knowledge graph according to an embodiment of the present application. The method comprises the following steps:
S1: Acquiring business data.

The business data acquired in this embodiment mainly comprises two aspects.

One is the appearance of new hot entity, which requires to be discovered and downloaded in time, the other is the change in the attributes of an entity or the relationship between entities, which requires a replacement or supplement of the relationship or attribute value.

S2: Loading a thesaurus file, and semanticizing the business data according to the thesaurus file, that is, extracting entity knowledge, entity attribute knowledge and relationship knowledge between entities from the business data. This embodiment supports loading of thesaurus files in formats like excel, csv, Qracle, mysql, etc. The entity knowledge, the entity attribute knowledge, and the relationship knowledge between entities are extracted by structured extraction, unstructured extraction, and special extraction, respectively.

In order to classify the three kinds of knowledge, the categories of the three kinds of knowledge are labeled.

Further, natural language processing technologies such as entity unification, anaphora resolution, etc. are applied to merge different expressions of the same entity and thus reduce the categories of entities. For example, "Bei Da" and "Peking University" are merged into the same entity "Peking University".

S3: Converting the thesaurus into an ontology, that is, converting descriptors in the thesaurus into concepts in the ontology, and converting a relationship between descriptors in the thesaurus into a relationship between concepts.

The thesaurus can be used as a basis for the conversion to the ontology, but the inter-word relationships expressed in most of the thesauruses are too broad to meet the precise semantic requirements in the ontology. Therefore, converting the descriptors and the inter-word relationships in the thesaurus is required to convert the thesauruses into concepts in the domain ontology and to clearly define the broad and inaccurate inter-word relationships in the thesaurus as relationships between concepts, so that the thesaurus truly becomes a resource for establishing the domain ontology.

The transformation of the inter-word relationships in the thesaurus comprises:
1) hierarchical relationship transformation: separating the relationship between genus and species, the relationship between the whole and its component, and accurately classifying them into corresponding relationships between ontologies;
2) correlative relationship transformation: determining the attribute relationships between ontologies;
3) equivalent relationship transformation: determining an equivalent relationship based on synonyms and homoionyms; it is preferable to select descriptors in thesauruses for conceptual processing when establishing ontologies because many non-descriptors, as lexical units in different historical periods, are no longer used with the development of society.
In addition, for each type of relationship, whether the relationships between concepts conform to the definition of the basic relationship in the ontology establishment is examined, and concepts that do not conform to the regulations are deleted, merged or created as new concept.

Further, this embodiment also comprises adding ontology attributes according to the descriptive words and annotations of thesauruses, and adding instances to the ontologies. Adding instances to the ontologies is namely to map multi-source knowledge into the ontologies, denoise and normalize the relational attribute information thereof.

S4: According to the converted thesaurus, classifying the knowledge extracted in step S2 into specific concepts.

S5: Constructing new knowledge ontologies and relationships between knowledge ontologies according to the knowledge and concepts related to the knowledge.

In this embodiment, new knowledge ontologies and relationships between knowledge ontologies are established by entity similarity calculation, superior-subordinate relationship digging, entity relationship or attribute statistical analysis, and knowledge reasoning methods.

S6: Merging the new knowledge ontologies with existing knowledge ontologies in the knowledge graph, and merge the new relationships between knowledge ontologies with existing relationships between knowledge ontologies.

S7: Updating the knowledge graph and thesaurus according to the knowledge ontologies after merging.

S8: For new business features, codes or non-formatted descriptions, extracting new descriptors according to semantic analysis, extending the thesaurus constitution according to a classification system of the thesaurus, and then repeating step S2 ~ S7.

The newly formed knowledge ontologies and the relationships thereof are expressed in ontology language and updated to the conceptual layer of the knowledge graph. For the removed concepts, entities previously classified there need to be moved to other corresponding positions. For new concepts, deduce the corresponding concept categories of the new concepts by following the classification principle of the thesaurus to find the superordinate descriptor of the descriptors responding to the new concepts, and semantic analysis, afterwards, classify the knowledge extracted into the new concept. For the original concepts, the newly acquired entities are categorized into a corresponding conceptual system as usual; then the newly acquired entity relationships and attributes are used to supplement, extend or replace the entity relationships and attributes. The thesaurus may be updated with the fused knowledge ontology, for example, adding descriptors to the existing thesaurus based on the new ontology concepts.

By loading a thesaurus, semanticizing the newly acquired business data, and merging the newly established knowledge ontologies with the existing ones, the first embodiment of the present application realizes sharing and reuse of the existing ontologies and also realizes semi-automatic dynamic maintenance of the conceptual layer of the knowledge graph, i.e. the ontologies, which speeds up the updating of the knowledge graph and improves its accuracy, and further improves the efficiency in visualizing everything reasonably by big data. At the same time, the ontologies are used to feed back the thesaurus, which expands the domain knowledge.

The Second Embodiment:

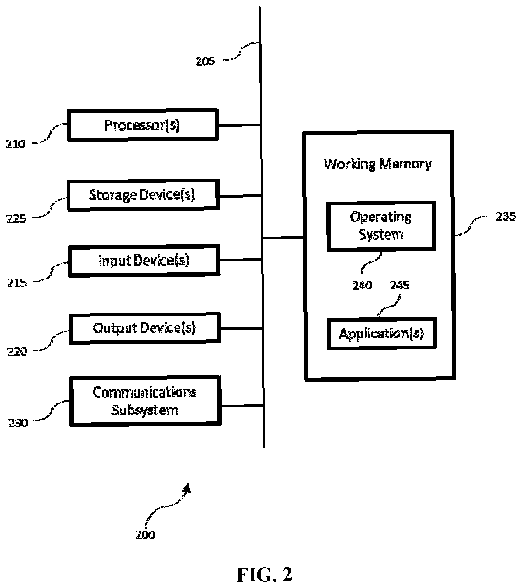

FIG. 2 illustrates an embodiment of a computer system. FIG. 2 provides a schematic illustration of one embodiment of a computer system 200 that can perform various steps of the methods provided by various embodiments. It should be noted that FIG. 2 is meant only to provide a generalized illustration of various components, any or all of which may be utilized as appropriate. FIG. 2, therefore, broadly illustrates how individual system elements may be implemented in a relatively separated or relatively more integrated manner.

The computer system 200 is shown comprising hardware elements that can be electrically coupled via a bus 205 (or may otherwise be in communication, as appropriate). The hardware elements may include one or more processors 210 , including, without limitation, one or more general-purpose processors and/or one or more special-purpose processors (such as digital signal processing chips, graphics acceleration processors, video decoders, and/or the like); one or more input devices 215 , which can include, without limitation, a mouse, a keyboard, remote control, and/or the like; and one or more output devices 220 , which can include, without limitation, a display device, a printer, and/or the like.

The computer system 200 may further include (and/or be in communication with) one or more non-transitory storage devices 225, which can comprise, without limitation, local and/or network accessible storage, and/or can include, without limitation, a disk drive, a drive array, an optical storage device, a solid-state storage device, such as a random access memory ("RAM"), and/or a read-only memory ("ROM"), which can be programmable, flash-updateable and/or the like. Such storage devices may be configured to implement any appropriate data stores, including, without limitation, various file systems, database structures, and/or the like. For instance, referring to FIG. 1A, business data acquired may be stored using one or more non-transitory storage devices 225.

The computer system 200 might also include a communications subsystem 230, which can include, without limitation, a modem, a network card (wireless or wired), an infrared communication device, a wireless communication device, and/or a chipset (such as a Bluetooth^{™} device, an 802.11 device, a WiFi device, a WiMax device, cellular communication device, etc.), and/or the like. The communications subsystem 230 may permit data to be exchanged with a network (such as the network described below, to name one example), other computer systems, and/or any other devices described herein. In many embodiments, the computer system 200 will further comprise a working memory 235, which can include a RAM or ROM device, as described above. The computer system 200 also can comprise software elements, shown as being currently located within the working memory 235, including an operating system 240 , device drivers, executable libraries, and/or other code, such as one or more application programs 245 , which may comprise computer programs provided by various embodiments, and/or may be designed to implement methods, and/or configure systems, provided by other embodiments, as described herein, such as applications implementing the steps of FIG. 1. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general purpose computer (or other device) to perform one or more operations in accordance with the described methods.

A set of these instructions and/or code might be stored on a non-transitory computer-readable storage medium, such as the non-transitory storage device(s) 225 described above. In some cases, the storage medium might be incorporated within a computer system, such as computer system 200. In other embodiments, the storage medium might be separate from a computer system (e.g., a removable medium, such as a compact disc), and/or provided in an installation package, such that the storage medium can be used to program, configure, and/or adapt a general purpose computer with the instructions/code stored thereon. These instructions might take the form of executable code, which is executable by the computer system 200 and/or might take the form of source and/or installable code, which, upon compilation and/or installation on the computer system 200 (e.g., using any of a variety of generally available compilers, installation programs, compression/decompression utilities, etc.), then takes the form of executable code.

It will be apparent to those skilled in the art that substantial variations may be made in accordance with specific requirements. For example, customized hardware might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer system (such as the computer system 200) to perform methods in accordance with various embodiments of the invention. According to a set of embodiments, some or all of the procedures of such methods are performed by the computer system 200 in response to processor 210 executing one or more sequences of one or more instructions (which might be incorporated into the operating system 240 and/or other code, such as an application program 245) contained in the working memory 235. Such instructions may be read into the working memory 235 from another computer-readable medium, such as one or more of the non-transitory storage device(s) 225. Merely by way of example, execution of the sequences of instructions contained in the working memory 235 might cause the processor(s) 210 to perform one or more procedures of the methods described herein.

The terms "machine-readable medium", "computer-readable storage medium" and "computer-readable medium" as used herein, refer to any medium that participates in providing data that causes a machine to operate in a specific fashion. These mediums may be non-transitory. In an embodiment implemented using the computer system 200, various computer-readable media might be involved in providing instructions/code to processor(s) 210 for execution and/or might be used to store and/or carry such instructions/code. In many implementations, a computer-readable medium is a physical and/or tangible storage medium. Such a medium may take the form of a non-volatile media or volatile media. Non-volatile media include, for example, optical and/or magnetic disks, such as the non-transitory storage device(s) 225. Volatile media include, without limitation, dynamic memory, such as the working memory 235.

Common forms of physical and/or tangible computer-readable media include, for example, a floppy disk, a flexible disk, hard disk, magnetic tape, or any other magnetic medium, a CD-ROM, any other optical medium, any other physical medium with patterns of marks, a RAM, a PROM, EPROM, a FLASH-EPROM, any other memory chip or cartridge, or any other medium from which a computer can read instructions and/or code.

Various forms of computer-readable media may be involved in carrying one or more sequences of one or more instructions to the processor(s) 210 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 200.

The communications subsystem 230 (and/or components thereof) generally will receive signals, and the bus 205 then might carry the signals (and/or the data, instructions, etc., carried by the signals) to the working memory 235, from which the processor(s) 210 retrieves and executes the instructions. The instructions received by the working memory 235 may optionally be stored on a non-transitory storage device 225 either before or after execution by the processor(s) 210.

It should further be understood that the components of computer system 200 can be distributed across a network. For example, some processing may be performed in one location using a first processor while other processing may be performed by another processor remote from the first processor. Other components of computer system 200 may be similarly distributed. As such, computer system 200 may be interpreted as a distributed computing system that performs processing in multiple locations. In some instances, computer system 200 may be interpreted as a single computing device, such as a distinct laptop, desktop computer, or the like, depending on the context.

Although the present application is specifically presented and described in conjunction with preferred embodiments, those skilled in the art should understand that various modifications in form and detail can be made to the present application without departing from the spirit and scope of the present application as defined by the appended claims, all of which fall within the protection scope of the present application.

## Claims

1. A method of dynamically upholding knowledge graphs, wherein the following steps are comprised:
S1: acquiring business data;
S2: loading a thesaurus file, and extracting entity knowledge, entity attribute knowledge and entity relationship knowledge from the business data according to the thesaurus file;
S3: converting descriptors in the thesaurus into concepts in ontologies, and
converting a relationship between descriptors in the thesaurus into a relationship between concepts;
S4: according to the converted thesaurus, classifying knowledge extracted in step S2 into specific concepts in the thesaurus;
S5: constructing new knowledge ontologies and relationships between knowledge ontologies according to the knowledge and concepts associated with the knowledge;
S6: merging new knowledge ontologies with existing knowledge ontologies and merging the new relationships between knowledge ontologies with existing relationships between knowledge ontologies;
S7: updating the knowledge graph and the thesaurus according to the knowledge ontologies after merging;
S8: for new business features, codes or non-formatted descriptions, extracting descriptors according to semantic analysis, extending the thesaurus constitution following the classification principle of the thesaurus, and then repeating step S2 ~ S7.

2. The method according to claim 1, wherein the entity knowledge, the entity attribute knowledge and the entity relationship knowledge are extracted by three methods: structured extraction, unstructured extraction, and special extraction.

3. The method according to claim 1, wherein step S2 further comprises merging different expressions of the same entity using natural language processing technologies.

4. The method according to claim 1, wherein said converting a relationship between descriptors in the thesaurus comprises:
1) Adjusting hierarchical relationship, wherein relationships between genus and species, relationships between whole and part are separated, and then accurately classified into the corresponding relationship between ontologies;
2) Adjusting associative relationship, wherein attribute relationship is mainly clarified;
3) Adjusting equivalence relationship, wherein synonym relationship, near-synonym relationship and substitution relationship between the ontologies are revealed.

5. The method according to claim 1, wherein new knowledge ontologies and relationships between knowledge ontologies in step S5 are established by entity similarity calculation, superior-subordinate relationship digging, entity relationship or attribute statistical analysis, and knowledge reasoning methods.

6. The method according to claim 1, wherein a superordinate thesaurus of a new concept and a corresponding concept category are found in step S8, following the classification principle of the thesaurus.

7. A terminal device for dynamically upholding knowledge graphs, which comprises: a processor, a storage device, and a computer program stored in the storage device and run on the processor, the processor executing the computer program to implement steps of the method according to any one of claims 1-6.

8. A computer readable storage medium storing a computer program, which implements steps of the method according to any one of claims 1 to 6 when executed by a processor.
